# EUROPÄISCHE PATENTSCHRIFT

(11) **EP 3 010 749 B1**
(45) Veröffentlichungstag und Bekanntmachung des Hinweises auf die Patenterteilung: **08.11.2017**
(21) Anmeldenummer: 14700553.2
(22) Anmeldetag: 16.01.2014
(51) Int. Cl.: B60R 25/01, B60L 11/18

(54) **ANSCHLUSSVORRICHTUNG FÜR EINE ELEKTRISCHE ANLAGE EINES FAHRZEUGS SOWIE VERFAHREN ZU DEREN BETRIEB, MIT FUNKSCHLÜSSEL**
TERMINAL DEVICE FOR AN ELECTRIC SYSTEM OF A VEHICLE, AND METHOD FOR OPERATING SAME USING A WIRELESS KEY
DISPOSITIF DE RACCORDEMENT POUR INSTALLATION ÉLECTRIQUE D'UN VÉHICULE ET PROCÉDÉ PERMETTANT LE FONCTIONNEMENT DUDIT DISPOSITIF, À CLÉ À TÉLÉCOMMANDE RADIOFRÉQUENCE

(30) Priorität: 19.06.2013 DE 102013010283
(43) Veröffentlichungstag der Anmeldung: 27.04.2016
(73) Patentinhaber: Audi AG, 85045 Ingolstadt (DE)
(72) Erfinder: MAUTER, Gerhard, 85092 Kösching (DE)
(74) Vertreter: Lehle, Josef
(86) Internationale Anmeldenummer: PCT/EP2014/000109
(87) Internationale Veröffentlichungsnummer: WO 2014/202162

(56) Entgegenhaltungen:
- US-A1- 2011 300 736
- US-A1- 2012 083 148
- US-A1- 2012 186 309
- US-A1- 2012 234 061
- US-A1- 2013 015 951

## Beschreibung

Die vorliegende Erfindung betrifft eine Anschlussvörrichtung für eine elektrische Anlage eines Fahrzeugs, welche Anschlussvorrichtung zum elektrischen Koppen der elektrischen Anlage des Fahrzeugs mit einer vom Fahrzeug getrennt angeordneten, elektrischen Energiequelle elektrisch verbundenen, vorgegeben Verbindungseinheit ausgebildet ist und ein Verriegelungsmittel aufweist, mittels dem die Verbindungseinheit im mit der Anschlussvorrichtung verbundenem Zustand verriegelbar ist. Darüber hinaus betrifft die Erfindung ein Fahrzeug mit einer elektrischen Anlage sowie ein Verfahren zum Betreiben einer elektrischen Anschlussvorrichtung für eine elektrische Anlage eines Fahrzeugs zum elektrischen Koppeln der elektrischen Anlage des Fahrzeugs mit einer vom Fahrzeug getrennt angeordneten, elektrischen Energiequelle, zu welchem Zweck eine mit der vom Fahrzeug getrennt angeordneten, elektrischen Energiequelle elektrisch verbundene Verbindungseinheit mit der Anschlussvorrichtung verbunden und verriegelt wird.

Bei zumindest teilweise, insbesondere auch überwiegend elektrisch angetriebenen Kraftfahrzeugen ist das Laden eines Fahrzeugakkumutators, der die für einen Fahrbetrieb des Fahrzeugs erforderliche elektrische Energie bereitstellt, über eine Steckdose am Fahrzeug vorgesehen, an die ein mit einem öffentlichen Energieversorgungsnetz verbundener Stecker angeschlossen werden kann. Außerhalb des Fahrzustands kann das Fahrzeug auf diese Weise im Ruhezustand geladen werden, so dass es für folgende bestimmungsgemäße Nutzungen vorzugsweise vollständig geladen ist.

Fahrzeuge der gattungsgemäßen Art sind insbesondere Kraftfahrzeuge, die zumindest teilweise mittels eines elektrischen Antriebs angetrieben werden können, wie zum Beispiel Elektromobile, Hybridfahrzeuge oder dergleichen.

Die Handhabung eines Ladevorgangs erfolgt je nach Typ des Kraftfahrzeugs durch das Stecken eines nicht verriegelbaren Ladesteckers in die Ladebuchse beziehungsweise Ladesteckdose des Fahrzeugs, woraufhin beispielsweise der Ladevorgang unmittelbar gestartet wird. Die Verwendung nicht verriegelbarer Fahrzeugstecker ermöglicht allerdings einen Missbrauch durch Dritte, insbesondere, wenn das Fahrzeug im Ruhezustand abgestellt ist. Aus diesem Grund ist in der Regel ein Verriegelungsmittel vorgesehen, welches den Ladestecker im in die Ladebuchse eingesteckten Zustand mechanisch verriegelt, sodass ein Trennen des Ladesteckers von der Ladebuchse durch unberechtigte Dritte behindert ist. Die Verriegelungsmittel können Halteklauen, Rastnasen oder dergleichen umfassen, die nur vom einem Innenbereich des Fahrzeugs zur Entriegelung betätigbar sind.

Darüber hinaus können derartige Kraftfahrzeuge über einen Timer verfügen, der es aufgrund einer Programmsteuerung erlaubt, das Fahrzeug dem Nutzer zu einem programmierten Abfahrtszeitpunkt geladen und klimatisiert zur Verfügung zu stellen. Die Programmierung des Timers, beispielsweise bezüglich Ladeeinstellungen sowie eine Auswahl oder ein Wechsel eines Lademodus wie sofortiges Laden, Timer-gesteuertes Laden oder dergleichen, können über ein Infotainment- oder auch ein Kombigerät erfolgen. Weiterhin können App-Anwendungen für Smartphones vorgesehen sein.

Der Start sowie das Beenden oder Abbrechen eines Ladevorgangs erfolgt dabei in der Regel mit dem Herstellen oder Lösen der Verbindung zwischen dem Stecker und der Ladebuchse beziehungsweise Steckdose. Darüber hinaus kann mittels der Infotainments- und/oder App-Anwendungen erreicht werden, einen Ladevorgang zu unterbrechen.

Als nachteilig hat es sich herausgestellt, dass zum Beenden oder Abbrechen eines Ladevorgangs in Verbindung mit einem verriegelbaren Ladestecker der Nutzer zunächst in das Fahrzeug einsteigen muss, um den Stecker im Fahrzeug-Innenraum zu entriegeln. Daraufhin muss der Nutzer aus dem Fahrzeug wieder aussteigen, um den Stecker aus der Ladebuchse beziehungsweise Ladedose zu entfernen. Der Nutzer muss somit einen lästigen Ein-und Ausstiegsvorgang durchführen, um das Fahrzeug für den Fahrbetrieb bereit zu machen.

Ebenso erweist es sich als nachteilig, einen Ein- und Ausstiegsvorgang durch den Nutzer durchzuführen, wenn ein Wechsel zwischen einem Timer-gesteuerten Laden und einem unmittelbaren Laden durchgeführt werden soll.

Die Nutzung eines Mobilfunkendgerätes, insbesondere einer durch das Mobilfunkendgerät ausführbaren Smartphone-App für die Entriegelung beziehungsweise den Wechsel des Ladeprogramms erweist sich als unzuverlässig, weil - abhängig vom Fahrzeugstandort - eine funkbasierte Kommunikationsverbindung unzuverlässig sein kann, so dass die gewünschte Funktion nicht ausgeführt werden kann. Zudem besteht die Gefahr, dass es bei einer versehentlichen Fehlbedienung zu einem ungewollten Entriegelungsvorgang kommt. Damit verbunden wäre auch der Abbruch des Ladevorgangs, wodurch das Fahrzeug nicht bestimmungsgemäß geladen wird. Darüber hinaus ist hierdurch eine Möglichkeit für Missbrauch durch Dritte geschaffen.

Die US 2012/0083148 A1 offenbart eine Verriegelungsvorrichtung für einen Leistungsversorgungsverbinder.

Die US 2011/0294238 A1 beschreibt eine Verbinderverriegelungsvorrichtung.

Die DE 10 2012 217 278 A1 offenbart eine Verriegelungsvorrichtung für einen Elektrofahrzeugladestecker.

Es offenbart ferner die US 2013/0015951 A1 eine Verriegelungsvorrichtung für eine Energieversorgungssteckdose.

Die US 2012/0186309 A1 offenbart eine Verriegelungsstruktur für eine Batterieladesteckdose.

Es ist somit die Aufgabe der Erfindung, eine Verbesserung bezüglich der vorgenannten Probleme zu erreichen.

Als Lösung werden mit der Erfindung ein Verfahren gemäß Anspruch 1 sowie eine Anschlussvorrichtung gemäß Anspruch 11 und ein Fahrzeug gemäß Anspruch 15 vorgeschlagen.

Bezüglich der Verfahrensführung schlägt die Erfindung insbesondere vor, dass ein Entriegeln aufgrund eines manuellen Betätigens eines Betätigungselements der Anschlussvorrichtung erfolgt, wenn die Verbindungseinheit mit der Anschlusseinheit verbunden ist.

Die Anschlussvorrichtung wird gemäß der Erfindung mit einem Betätigungselement versehen, das von dem Benutzer manuell betätigbar ist. Bedarfsgerecht können ein, zwei oder auch mehrere Betätigungselemente vorgesehen sein. Vorzugsweise ist das Betätigungselement in unmittelbarer Nähe der Anschlussvorrichtung angeordnet, so dass sowohl eine Betätigung des Betätigungselements als auch ein Verbinden der Verbindungseinheit mit der Anschlussvorrichtung vom Benutzer durchgeführt werden kann, ohne dass dieser seinen Standort verändern muss. Die Anschlussvorrichtung kann beispielsweise ein Steckbuchse, eine Steckdose, eine Steckkupplung, aber auch ein Stecker, Kombinationen hiervon oder dergleichen sein. Die Anschlussvorrichtung ist vorzugsweise in oder an einer Außenhaut des Fahrzeugs angeordnet, so dass sie vom Nutzer von außerhalb des Fahrzeugs bequem erreichbar ist und bedient werden kann. Das Verriegeln kann vorzugsweise automatisch beim Herstellen der Verbindung zwischen der Anschlussvorrichtung und der Verbindungseinheit vorgesehen sein. Insbesondere kann ein automatisches Verriegeln vorgesehen sein. Natürlich kann darüber hinaus auch vorgesehen sein, dass mittels der Betätigung des Betätigungselements ein Verriegeln erreicht wird. Der Nutzer muss also nicht mehr in das Fahrzeug einsteigen, um eine Verriegelung oder eine Entriegelung durchzuführen. Er kann dies in unmittelbarer Abfolge mit dem Herstellen oder Lösen der Verbindung des Ladesteckers mit der Ladebuchse durchführen, ohne seinen Standort ändern zu müssen.

Die Erfindung ist natürlich nicht nur für die Anwendung bei Landfahrzeugen wie Kraftfahrzeugen, insbesondere Personenkraftfahrzeugen, Lastkraftfahrzeugen oder dergleichen einsetzbar, sondern darüber hinaus auch bei Wasser- oder Luftfahrzeugen.

Die vom Fahrzeug getrennt angeordnete, elektrische Energiequelle ist eine fahrzeugfremde Energiequelle, wie beispielsweise ein öffentliches Energieversorgungsnetz, ein ortsfester oder mobiler, stationärer Generator, eine Brennstoffzelle, eine Solarzellenanordnung, ein Windrad, ein Akkumulator, Kombinationen hiervon oder dergleichen. Die Verbindungseinheit ist vorzugsweise komplementär zur Anschlussvorrichtung ausgebildet, so dass eine einfache, zuverlässige Verbindung erreicht werden kann. Darüber hinaus können natürlich auch Verbindungsmittel vorgesehen sein, die dazu dienen, die Verbindungseinheit mit der Anschlussvorrichtung zu verbinden, beispielsweise ein Antrieb, der die Verbindungseinheit zur Anschlussvorrichtung führt und sie im verbundenen Zustand hält oder dergleichen. Die Verriegelung kann mittels Verriegelungsmitteln bereitgestellt werden, die insbesondere eine mechanische Verriegelung ermöglichen, so dass ein unberechtigtes Verbinden und/oder auch ein unberechtigtes Lösen der Verbindung nicht ermöglicht ist. Insofern ist die Verbindung zwischen der Verbindungseinheit und der Anschlussvorrichtung also eine lösbare Verbindung. Vorzugsweise dient die Verbindung zwischen der Verbindungseinheit und der Anschlussvorrichtung dem Laden eines fahrzeugeigenen Energiespeichers, der die elektrische Energie für den bestimmungsgemäßen Betrieb des Fahrzeugs, insbesondere während des Fahrzustands, bereitstellt.

Das Betätigungselement kann beispielsweise durch ein elektromechanisches Bauteil wie einen Schalter, einen Taster, Kombinationen hiervon oder dergleichen gebildet sein. Darüber hinaus kann das Betätigungselement auch einen elektronischen Sensor umfassen, der eine manuelle Betätigung detektiert, wie zum Beispiel Betätigungselemente basierend auf kapazitiven oder optischen Sensoren, biometrischen Sensoren, Kombinationen hiervon oder dergleichen. Zum Verriegeln und zum Entriegeln können unterschiedliche Betätigungselemente vorgesehen sein, bevorzugterweise ist das Verriegelungsmittel jedoch mittels eines einzigen Betätigungselements sowohl verriegelbar als auch entriegelbar. Das Betätigungselement kann beispielsweise als elektromechanisches oder auch elektronisches Bauteil ausgebildet sein, welches mit einem Fahrzeug-BUS in Kommunikationsverbindung steht. Ebenso ist das Verriegelungsmittel über den Fahrzeug-BUS gesteuert. Eine mit dem Fahrzeug-BUS weiterhin in Kommunikationsverbindung stehende Steuereinheit des Fahrzeugs kann für die Erfassung des Betätigens des Betätigungselements ausgebildet sein und einen entsprechenden Steuerbefehl an das Verriegelungsmittel übermitteln.

Die Erfindung bezieht sich auf die Nutzung von Funkschlüsseln, insbesondere in Verbindung mit der Funktion "Keyless-entry". Danach sieht die Erfindung vor, dass aufgrund eines manuellen Betätigens des Betätigungselements der Anschlussvorrichtung geprüft wird, ob sich ein berechtigter Funkschlüssel in Kommunikationsreichweite zum Fahrzeug befindet. Der Nutzer braucht also das Fahrzeug nicht aufzuschließen, sondern allein aufgrund der Tatsache, dass er sich mit seinem Funkschlüssel in Kommunikationsreichweite zum Fahrzeug befindet und dieser Schlüssel eine gültige Berechtigung aufweist, dass das Betätigen beispielsweise die Steuerung des Fahrzeugs veranlasst, zu prüfen, ob die Berechtigung in Form des Schließgeheimnis des Funkschlüssels gültig ist. Nur, wenn eine gültige Berechtigung vorliegt, wird die Funktion aufgrund des Betätigens des Betätigungselements in gewünschter Weise ausgeführt.

Mittels des manuellen Betätigens des Betätigungselements wird ein Fahrzeug-BUS aktiviert. Dieser Funktion liegt die Erkenntnis zugrunde, dass das Fahrzeug üblicherweise während des Ruhezustands, in dem das Fahrzeug beispielsweise abgestellt, insbesondere geparkt, ist, geladen wird. In diesem Zustand ist eine Aktivität des Fahrzeug-BUS nicht erforderlich. Sobald der Ladevorgang gestartet ist, kann der Fahrzeug-BUS, insbesondere, wenn das Fahrzeug verschlossen ist, deaktiviert werden, um einerseits die Sicherheit zu erhöhen und andererseits Energie einzusparen. Mittels der Betätigung des Betätigungselements durch den Nutzer kann der Fahrzeug-BUS aktiviert werden, damit der Nutzer mittels der manuellen Betätigung des Betätigungselements die gewünschte Funktion aktivieren kann. Insbesondere kann natürlich vorgesehen sein, dass für die Aktivierung des Fahrzeug-BUS das Fahrzeug in den unverschlossenen Zustand gebracht werden muss.

Entsprechend ist ferner vorgesehen, dass das Aktivieren nur im unverschlossenen Zustand des Fahrzeugs freigegeben ist. Der Fahrzeug-BUS kann also nur dann aktiviert werden, wenn zuvor das Fahrzeug aufgeschlossen worden ist. Im verschlossenen Zustand ist der Fahrzeug-BUS dann deaktiviert, so dass neben der Energieeinsparung ein unberechtigtes Manipulieren durch Dritte erschwert ist. Insbesondere wird vorgeschlagen, dass das Betätigungselement deaktiviert ist, wenn das Fahrzeug verschlossen ist.

Besonders vorteilhaft bilden die Anschlussvorrichtung und das Betätigungselement eine gemeinsame Baueinheit, an die der Fahrzeug-BUS sowie die elektrische Anlage des Fahrzeugs angeschlossen sind. Die elektrische Anlage des Fahrzeugs umfasst neben dem vorgenannten Energiespeicher des Fahrzeugs weitere elektrische Einrichtungen des Fahrzeugs wie zum Beispiel Leuchtmittel, insbesondere Fahrzeugleuchten für den Fahrbetrieb, eine elektrische angetriebene Klimaanlage, Fahrzeuginnenbeleuchtungen, eine Fahrzeugsteuerung und/oder weitere. Darüber hinaus umfasst die elektrische Anlage des Fahrzeugs insbesondere auch wenigstens einen elektrischen Antrieb, der einen gewünschten Fahrbetrieb des Fahrzeugs erlaubt oder zumindest unterstützt. Natürlich kann ergänzend vorgesehen sein, dass neben dem elektrischen Antrieb, der beispielsweise durch eine rotierende elektrische Maschine oder dergleichen gebildet sein kann, auch eine Verbrennungskraftmaschine oder dergleichen ergänzend vorgesehen sein kann.

Entsprechend ist die erfindungsgemäße Anschlussvorrichtung zur Durchführung des Verfahrens der Erfindung eingerichtet.

Folglich ist ein Fahrzeug der Erfindung mit einer elektrischen Anlage ausgerüstet, an die eine Anschlussvorrichtung der Erfindung angeschlossen ist.

Gemäß einer Weiterbildung der Erfindung wird vorgeschlagen, dass mittels des manuellen Betätigens des Betätigungselements ein Ladevorgang eines Energiespeichers des Fahrzeugs gesteuert wird. So kann beispielsweise vorgesehen sein, dass mittels Betätigen des Betätigungselements durch den Nutzer ein unmittelbares Laden des Energiespeichers des Fahrzeugs erfolgt. Darüber hinaus kann auch vorgesehen sein, dass der Ladevorgang durch das Betätigen des Betätigungselements unterbrochen wird. Natürlich kann hierfür auch ein separates Betätigungselement vorgesehen sein, so dass das Starten des Ladevorgangs beziehungsweise das Unterbrechen des Ladevorgangs und das Verriegeln beziehungsweise Entriegeln getrennt voneinander ausgeführt werden können.

Eine Weiterbildung der Erfindung sieht vor, dass ein Ladevorgang für den Energiespeicher mit dem Verriegeln automatisch aktiviert wird. Dies erlaubt es, mit einer einzigen Betätigung durch den Nutzer sowohl eine Verriegelung als auch einen aktivierten Ladevorgang zu erreichen.

Gemäß einer Weiterbildung wird vorgeschlagen, dass der Fahrzeug-BUS nach Beenden des Ladevorgangs mittels eines manuellen Betätigens eines Betätigungselements, insbesondere des Betätigungselements der Anschlussvorrichtung, aktiviert wird. Ist der Ladevorgang beendet, obwohl der Ladestecker noch in die Ladebuchse eingesteckt ist, kann demnach vorgesehen sein, dass der Fahrzeug-BUS deaktiviert ist, spätestens nach dem Beenden des Ladevorgangs. Mittels einer Betätigung des Betätigungselements kann dann der Fahrzeug-BUS wieder aktiviert werden, damit eine gewünschte Funktion aufgrund einer Nutzerbetätigung des Betätigungselements ausgeführt werden kann. Befindet sich das Fahrzeug im Ruhezustand und der Energiespeicher des Fahrzeugs wird geladen, kann mittels des manuellen Betätigens des Betätigungselements der Anschlussvorrichtung der Ladevorgang beendet werden, sofern festgestellt wird, dass der Energiespeicher aktuell geladen wird. Beispielsweise kann das Betätigungselement auf diese Weise mit zwei Funktionen versehen sein, so beispielsweise dem Starten des unmittelbaren Ladens nach Herstellen der Verriegelung und der zweiten Funktion, die während des Ladevorgangs auswählbar ist, indem eine manuelle Betätigung des Betätigungselement erfolgt. Darüber hinaus kann vorgesehen sein, dass mit dem Beenden des Ladevorgangs zugleich auch die Verriegelungsmittel entriegelt werden, so dass die Verbindung zwischen der Verbindungseinheit und der Anschlussvorrichtung gelöst werden kann.

Darüber hinaus kann vorgesehen sein, dass, beispielsweise mittels des manuellen Betätigens des Betätigungselements, ein Timer zum Steuern des Ladevorgangs für den Energiespeicher aktiviert wird. Der Timer kann zum Beispiel durch eine Schaltuhr, eine programmierte elektronische Zeituhr, Kombinationen hiervon oder dergleichen gebildet sein. Vorzugsweise ist der Timer programmierbar, so dass der Nutzer oder auch ein Hersteller wenigstens einen Parameter für den Ladevorgang vorgeben kann. Parameter können beispielsweise eine Ladezeit, ein Beginn des Ladevorgangs sowie ein Ende des Ladevorgangs, ein Ladestrom, eine Ladekennlinie oder dergleichen sein. Vorzugsweise ist der Parameter an dem elektrischen Energiespeicher des Fahrzeugs angepasst gewählt. Das manuelle Betätigen des Betätigungselements kann anstelle eines unverzüglichen Ladens den programmierten Timer zum Steuern des Ladevorgangs aktivieren. Es kann aber auch vorgesehen sein, dass die Art des Betätigens des Betätigungselements entweder den Timer aktiviert oder einen unmittelbaren Ladevorgang. Dies kann beispielsweise dadurch erreicht werden, dass das Betätigungselement mehrmals hintereinander betätigt wird, wobei die Anzahl der Betätigungen eine Auswahl bezüglich der gewünschten Steuerung erlaubt.

Weiterhin kann vorgesehen sein, dass bei aktiviertem Timer automatisch beim Verbinden der Verbindungseinheit mit der Anschlusseinheit ein Timer-gesteuerter Ladevorgang ausgeführt wird. Dies erlaubt es, den Ladevorgang automatisch nutzerspezifisch auszuführen.

Insbesondere kann der Ladevorgang aufgrund eines manuellen Betätigens des Betätigungselements der Anschlussvorrichtung beendet und die Verbindung der Verbindungseinheit mit der Anschlussvorrichtung entriegelt werden. Dies erlaubt es, den Timer-gesteuerten Ladevorgang zu unterbrechen beziehungsweise abzubrechen, wenn der Nutzer beispielsweise unmittelbar über das Fahrzeug verfügen möchte, obwohl der Ladevorgang durch den Timer noch nicht abgeschlossen ist.

Gemäß einer weiteren Ausgestaltung kann bei einem Timer-gesteuerten Ladevorgang und aktivem Fahrzeug-BUS aufgrund eines manuellen Betätigens des Betätigungselements der Anschlussvorrichtung der Ladevorgang ohne Timersteuerung fortgeführt werden. Diese Funktion ermöglicht es, von einem Timer-gesteuerten Ladevorgang in einen nicht Timer-gesteuerten Ladevorgang zu wechseln. Zu diesem Zweck kann natürlich ein separates Betätigungselement vorgesehen sein, welches darüber hinaus auch ein Umschalten zwischen einem Timer-gesteuerten Ladevorgang und einem nicht Timer-gesteuerten Ladevorgang erlauben kann.

Darüber hinaus kann vorgesehen sein, dass bei einer gültigen Berechtigung der Fahrzeug-BUS aktiviert wird. Vorzugsweise ist der Fahrzeug-BUS nur dann aktiviert, wenn sich der Funkschlüssel mit einer gültigen Berechtigung in Kommunikationsreichweite zum Fahrzeug befindet. Entfernt sich der Schlüssel aus der Kommunikationsreichweite zum Fahrzeug, kann vorgesehen sein, dass der Fahrzeug-BUS automatisch deaktiviert wird. Der Fahrzeug-BUS kann beispielsweise ein CAN-BUS oder dergleichen sein.

Die Erfindung sieht vor, dass die Anschlussvorrichtung zur Durchführung des Verfahrens der Erfindung eingerichtet ist. Demzufolge kann die Anschlussvorrichtung ein Betätigungselement aufweisen, mittels dem das Verriegelungsmittel steuerbar ist. Die Anordnung des Betätigungselements an der Anschlussvorrichtung, vorzugsweise im Bereich der Verbindung mit einer Verbindungseinheit, erlaubt es dem Nutzer, vorzugsweise, ohne seine Position zu verändern, die Verbindung der Verbindungseinheit mit der Anschlussvorrichtung herzustellen und zugleich auch das Betätigungselement zu betätigen. Umständliche ergänzende Ein- und Ausstiegsvorgänge können somit weitgehend vermieden werden. Durch die vorgegebene Verbindungseinheit kann erreicht werden, dass diese im mit der Anschlussvorrichtung verbundenen Zustand mit den Verriegelungsmitteln interagieren kann, so dass ein vorzugsweise automatisches Verriegeln in diesem Zustand erreicht werden kann. Das Einrichten der Anschlussvorrichtung kann mittels einer Steuerung, insbesondere einer elektronischen Steuerung erreicht werden. Die Steuerung kann zu diesem Zweck eine elektronische Schaltung und/oder eine programmgesteuerte Rechnereinheit aufweisen, die die erfindungsgemäßen Verfahrensschritte ausführen kann.

Darüber hinaus kann die Anschlussvorrichtung ein zweites oder auch mehrere Betätigungselemente aufweisen, mittels dem beziehungsweise denen eine oder mehrere elektrische Funktionen aktivierbar sind. Die elektrische Funktion kann beispielsweise durch ein unmittelbar zu startendes Laden, ein Beenden des Ladevorgangs, Aktivieren einer Timer-Steuerung, weitere oder dergleichen gebildet sein.

Darüber hinaus kann vorgesehen sein, dass die Anschlussvorrichtung ein Anzeigeelement aufweist, das dem Betätigungselement zugeordnet ist. Vorzugsweise kann für jedes Betätigungselement ein eigenes Anzeigeelement vorgesehen sein. Das Anzeigeelement ist vorzugsweise ein optisches Anzeigeelement in Form einer Leuchte wie einer Glühlampe, einer Leuchtdiode, einer Glimmlampe, Kombinationen hiervon oder dergleichen. Das Anzeigeelement kann ebenfalls über den Fahrzeug-BUS gesteuert sein. Vorzugsweise zeigt das Anzeigeelement die mit dem Betätigungselement aktivierte beziehungsweise deaktivierte Funktion an. Auf diese Weise erhält der Nutzer eine Rückmeldung über seine Betätigung. Darüber hinaus kann vorgesehen sein, dass das Anzeigeelement lediglich bei aktiviertem Fahrzeug-BUS eine Anzeige durchführt.

Weitere Vorteile und Merkmale sind der folgenden Beschreibung von Ausführungsbeispielen zu entnehmen. In den Figuren sind gleiche Bauteile mit gleichen Bezugszeichen bezeichnet. Die Beschreibung der Ausführungsbeispiele dient lediglich der Erläuterung der Erfindung und soll diese nicht beschränken.

Es zeigen:
- Fig. 1: eine schematische Ausschnittsdarstellung eines Fahrzeugs im Bereich einer Ladedose gemäß der Erfindung in einem ersten Ausführungsbeispiel,
- Fig. 2: schematisch einen Ausschnitt aus einem Fahrzeug im Bereich einer Ladedose gemäß einem zweiten Ausführungsbeispiel der Erfindung mit einem aufgesteckten Stecker und
- Fig. 3: einen Ausschnitt aus einem Fahrzeug in einer schematischen Darstellung im Bereich einer Ladedose gemäß einem dritten Ausführungsbeispiel der Erfindung.

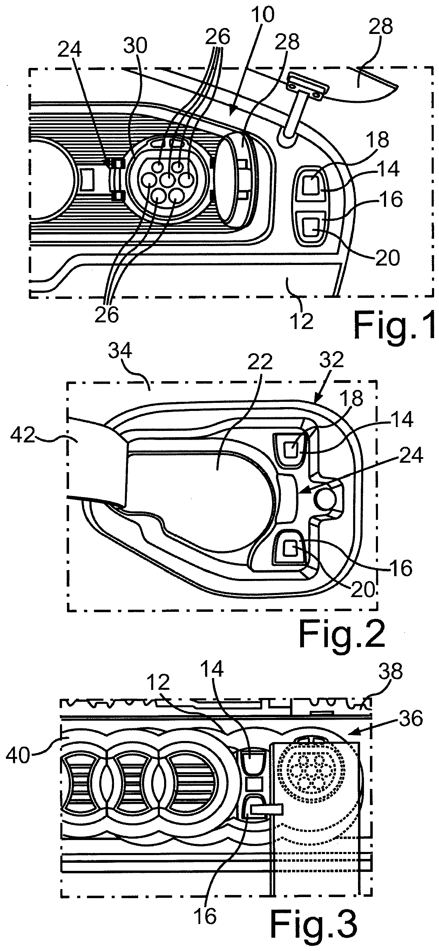

Fig. 1 zeigt eine Ladedose 10 als Anschlussvorrichtung für eine elektrische Anlage eines Fahrzeugs 12 gemäß einem ersten Ausführungsbeispiel in einer schematischen Ausschnittsdarstellung. Die Ladedose 10 ist an einer Außenhaut des Fahrzeugs 12 angebracht und weist eine Verschlussklappe 28 auf, mittels der die Ladedose 10 während eines Fahrbetriebs des Fahrzeugs 12 verschlossen werden kann. Dadurch ist die Ladedose 10 während des Fahrbetriebs geschützt. Bei dem Fahrzeug 12 handelt es sich um ein elektrisch angetriebenes Fahrzeug oder auch ein Hybridfahrzeug, welches neben einer Verbrennungskraftmaschine einen elektrischen Antrieb ergänzend aufweist. Die elektrische Anlage, die für die elektrischen Funktionen des Fahrzeugs 12 erforderlich ist, ist in den Figuren nicht dargestellt. Jedoch umfasst die elektrische Anlage neben einer elektrischen Maschine, die als rotierende elektrische Maschine ausgebildet sein kann, einen elektrischen Energiespeicher, der beispielsweise als Akkumulator, als Kondensator, Kombinationen hiervon oder dergleichen ausgebildet sein kann. Darüber hinaus ist eine Steuerung vorgesehen, die mittels eines Wechselrichters den Betrieb der elektrischen Maschine steuert. Darüber hinaus kann die Steuerung auch weitere Funktionen, beispielsweise hinsichtlich eines Ladevorgangs des elektrischen Energiespeichers, bereitstellen. Die elektrische Anlage kann darüber hinaus weitere Funktionen wie Fahrzeugbeleuchtung, Fahrzeugheizung, Klimaanlage oder dergleichen umfassen.

Zu erkennen ist in Fig. 1, dass die Ladedose 10 einen Steckbereich 30 mit Kontakthülsen 26 aufweist. Die Kontakthülsen 26 sind elektrisch mit der elektrischen Anlage des Fahrzeugs 12 verbunden. Durch die Anordnung der Kontakthülsen 26 ist eine Codierung bereitgestellt, so dass ein Stecker 22 (Fig. 2) nur in einer einzigen Steckposition mit der Ladedose 10 verbunden werden kann, indem der Stecker 22 manuell auf die Ladedose 10 aufgesteckt wird, wenn die Verschlussklappe 28 in der geöffneten Stellung ist. Zu diesem Zweck weist der Stecker 22 entsprechende Kontaktstifte auf, mittels denen ein elektrischer Kontakt zu den Kontakthülsen 26 hergestellt werden kann. Die in den Figuren nicht dargestellten Kontaktstifte des Steckers 22 sind über eine elektrische Anschlussleitung mit einer elektrischen Energiequelle außerhalb des Fahrzeugs 12 verbunden, beispielsweise einem öffentlichen Energieversorgungsnetz. Entsprechend der Art der bereitgestellten elektrischen Energie durch die fahrzeugfremde elektrische Energiequelle können die Anzahl und Anordnung der Kontaktstifte 26 am Stecker 22 gewählt sein.

Die Ladedose 10 dient zum elektrischen Koppeln der elektrischen Anlage des Fahrzeugs 12 mit dem mit der vom Fahrzeug 12 getrennt angeordneten, elektrischen Energiequelle elektrisch verbundenen Stecker 22. Die Ladedose 10 weist ferner eine Verriegelungseinheit 24 als Verriegelungsmittel auf, mittels der der Stecker 22 im mit der Ladedose 10 verbundenen Zustand verriegelbar ist.

Die Ladedose 10 weist darüber hinaus Taster 14, 16 als Betätigungselemente auf, mittels denen einerseits Ladevorgänge gesteuert werden können und andererseits der Stecker 22 ver- und/oder entriegelt werden kann. Die Taster 14, 16 beinhalten jeweils eine Leuchtdiode (LED) 18, 20 als Anzeigeelement zur Funktionsrückmeldung.

Der Taster 14 ist als Sofortladetaste gekennzeichnet, indem er mit einem Steckersymbol versehen ist. Der andere Taster 16 ist als Timerladetaste vorgesehen und entsprechend mit einem Uhrensymbol beziehungsweise einem Steckersymbol in Kombination mit einem Uhrensymbol versehen.

In der vorliegenden Ausgestaltung ist vorgesehen, dass die Taster 14, 16 in der Lage sind, einen Fahrzeug-BUS des Fahrzeugs 12 zu aktivieren, das heißt, das Fahrzeug 12 bei BUS-Ruhe zu wecken, wenn das Fahrzeug 12 nicht verschlossen ist. Dagegen ist die Funktion der Taster 14, 16 deaktiviert, wenn das Fahrzeug 12 verschlossen ist. Dadurch kann Missbrauch durch Dritte weitgehend vermieden werden.

Fig. 2 zeigt in einem zweiten Ausführungsbeispiel eine Ladedose 32 eines Personenkraftfahrzeugs 34, die sich von der Ausgestaltung gemäß Fig. 1 im Wesentlichen nur durch die Anordnung der Ladedose und der Taster 14, 16 unterscheidet. Bezüglich der Bauteile und deren Funktion wird deshalb zum Ausführungsbeispiel gemäß Fig. 1 verwiesen. In diesem Ausführungsbeispiel ist der Stecker 22 in die Ladebuchse 32 eingesteckt und verriegelt. Am Stecker 22 ist ein Kabel 42 angeschlossen, das mit einem nicht dargestellten öffentlichen Energieversorgungsnetz als Energiequelle verbunden ist.

Eine weitere Ausgestaltung einer erfindungsgemäßen Anschlussvorrichtung zeigt Fig. 3. In Fig. 3 ist eine Ladedose 36 eines Personenkraftfahrzeugs 38 dargestellt. Die Ladedose 36 weist die Bauteile und Funktionen der Ladedosen der vorhergehenden Ausführungsbeispiele auf, weshalb ergänzend auf die Ausführungsbeispiele zu den Fig. 1 und 2 verwiesen wird. Darüber hinaus ist die Ladedose 36 mit einem Verschlussdeckel 40 versehen, der im Unterschied zur Verschlussklappe 28 gemäß dem Ausführungsbeispiel nach Fig. 1 nicht schwenkbar, sondern verschiebbar ist.

Gemäß einem weiteren Ausführungsbeispiel kann eine Funktionslogik wie folgt vorgesehen sein. Wird bei nicht programmiertem oder deaktiviertem Timer der Stecker 22 in die Ladedose 10, 36, 32 gesteckt, wird dadurch automatisch unmittelbar ein Ladevorgang gestartet, und die LED 18 des Tasters 14 wird eingeschaltet. Dies erfolgt über eine nicht dargestellte Fahrzeugsteuerung, die über den Fahrzeug-BUS mit den entsprechenden Komponenten in Kommunikationsverbindung steht und diese entsprechend steuert. Mit dem Stecken des Steckers 22 in die Ladedose 10, 32, 36 und dem Beginn des Ladevorgangs wird zugleich auch automatisch die Verriegelungseinheit 24 betätigt, so dass der Stecker 22 im eingesteckten Zustand verriegelt ist. In diesem Zustand kann der Stecker 22 nicht von der Ladedose 10, 32, 36 entfernt werden. Die LED 18 zeigt dies durch Aufleuchten an.

Erfolgt eine manuelle Betätigung des Tasters 14 während des Ladevorgangs, wird der Ladevorgang unterbrochen und der Stecker 22 mittels der Verriegelungseinheit 24 entriegelt, so dass der Stecker 22 von der Ladedose 10, 36, 32 abgezogen werden kann. Entsprechend erlischt die LED 18 des Tasters 14.

Wird während eines bereits begonnenen Ladevorgangs der Taster 16 betätigt, dessen LED 20 in diesem Zustand zunächst aus ist, erfolgt ein kurzzeitiges Blinken der LED 20, um dem Nutzer anzuzeigen, dass diese Funktion im aktuellen Betriebszustand nicht verfügbar ist. Es ist kein Timer programmiert beziehungsweise der Timer ist nicht aktiv. In diesem Fall wird der laufende Ladevorgang nicht unterbrochen und der Stecker 22 nicht entriegelt.

Ist der Ladevorgang beendet und der Fahrzeug-BUS deaktiviert, sind die LED's 18, 20 entsprechend ausgeschaltet. Es kann dann mittels Betätigung einer der beiden Taster 14, 16 der Fahrzeug-BUS wieder aktiviert werden, woraufhin die LED 18 des Tasters 14 wieder eingeschaltet wird. Eine erneute Betätigung des Tasters 14 führt zur Betätigung der Verriegelungseinheit 24, die daraufhin den Stecker 22 entriegelt, sofern das Fahrzeug 12, 34, 36 nicht verschlossen ist. Anschließend wird die LED 18 ausgeschaltet.

Wird bei programmiertem und/oder nicht deaktiviertem Timer der Stecker 22 in die Ladedose 10, 32, 36 gesteckt, wird automatisch ein Timer-gesteuerter Ladevorgang gestartet. Die entsprechende Funktionsrückmeldung mittels der LED 20 wird eingeschaltet. Eine manuelle Betätigung des Tasters 16 durch den Nutzer während des Ladevorgangs unterbricht den Ladevorgang und betätigt die Verriegelungseinheit 24, woraufhin der Stecker 22 entriegelt wird. Dieser kann sodann abgezogen werden, woraufhin die LED 20 erlischt.

Die Betätigung einer der beiden Tasten 14, 16 nach Ende des Ladevorgangs, wenn der Fahrzeug-BUS deaktiviert ist, weckt den Fahrzeug-BUS und schaltet die Funktionsrückmeldung durch die LED 20 wieder ein. Eine erneute Betätigung des Tasters 16 führt zur Entriegelung des Steckers 22 bei nicht verschlossenem Fahrzeug 12, 34, 36. Die LED 20 wird ausgeschaltet.

Wird im Timer-gesteuerten Lademodus und bei aktivem Fahrzeug-BUS, wenn die LED 20 leuchtet, der Taster 14 betätigt, wird in den vom Timer nicht gesteuerten Lademodus gewechselt. Die LED 20 wird abgeschaltet und die LED 18 stattdessen eingeschaltet. Ein Wechsel zum Timer-gesteuerten Laden erfolgt analog.

Bei verschlossenem Fahrzeug 12, 34, 36 muss dieses zunächst geöffnet werden, damit die Funktion der Taster 14, 16 aktiviert wird. Da das Öffnen des Fahrzeugs 12 in der Regel auch ein Aktivieren des Fahrzeug-BUS zur Folge hat, wird die entsprechende LED 18, 20 automatisch eingeschaltet. Damit kann eine erneute Eingabe der vorgenannten Bedienvorgänge vermieden werden, die bei nicht verschlossenem Fahrzeug 12, 34, 36 zunächst nur den Fahrzeug-BUS aktivieren.

Eine weitere Ausgestaltung der Erfindung bezieht sich auf die Nutzung von Funkschlüsseln bei Fahrzeugen, bei denen ein Nutzer selbst keinerlei Betätigung des Funkschlüssels vorzunehmen braucht, um das Fahrzeug zu öffnen beziehungsweise zu schließen. Diese Funktion wird häufig auch "Keyless-entry" genannt. Mit der Erfindung kann auch in diesem Fall gewährleistet werden, dass der Nutzer eine gewünschte Betätigung im Bereich der Ladedose 10, 32, 36 durchführen kann, ohne einen Schlüssel ergänzend betätigen zu müssen. In diesem Fall sind die Taster 14, 16 "Kessy-fähig" ausgeführt, das heißt, sobald der Nutzer mit seinem Funkschlüssel in Kommunikationsreichweite zum Fahrzeug 12, 34, 36 gelangt, ist der Fahrzeug-BUS aktiviert und somit auch die Taster 14, 16 bedienfähig.

Ein Start des Ladevorgangs kann, wie zu den vorhergehenden Beispielen beschrieben, ausgeführt sein.

Ist der Fahrzeug-BUS deaktiviert und das Fahrzeug im verschlossenen Zustand, erfolgt aufgrund einer manuellen Betätigung einer der beiden Taster 14, 16 die Prüfung, ob ein berechtigter Fahrzeugschlüssel in Kommunikationsreichweite zum Fahrzeug 12, 34, 36 ist. Bei positiver Prüfung wird der Fahrzeug-BUS aktiviert und die entsprechende LED 18, 20 wird eingeschaltet. Eine erneute Betätigung einer der beiden Taster 14, 16 führt zu der entsprechenden Funktion, wie bereits zu den vorhergehenden Ausführungsbeispielen beschrieben, obwohl das Fahrzeug 12, 34, 36 zunächst verschlossen bleibt.

Eine manuelle Betätigung einer der beiden Taster 14, 16 im verschlossenen Zustand des Fahrzeugs 12, 34, 36 bei aktiviertem Fahrzeug-BUS - die entsprechende LED 18, 20 ist eingeschaltet - führt zur unmittelbaren Reaktion wie zu den vorhergehenden Ausführungsbeispielen beschrieben, nämlich beispielsweise Wechsel des Lademodus zwischen Timer-gesteuert und unmittelbarem Laden oder Ver- oder Entriegeln des Steckers 22.

In einem weiteren Ausführungsbeispiel kann darüber hinaus vorgesehen sein, dass ein automatischer Start des Ladevorgangs in Abhängigkeit der Programmierung des Timers entfällt. Stattdessen entscheidet der Nutzer durch die manuelle Betätigung einer der beiden Taster 14, 16 über den gewählten Lademodus, nachdem der Stecker 22 in die Ladedose 10, 32, 36 eingesteckt ist. Erst dadurch wird dann der Stecker 22 mittels der Verriegelungseinheit 24 verriegelt und die entsprechende LED 18, 20 wird eingeschaltet.

Die vorgenannten Ausführungsbeispiele dienen lediglich der Erläuterung der Erfindung und sollen diese nicht beschränken. Insbesondere können natürlich Merkmale und Ausführungsbeispiele in beliebiger Weise miteinander kombiniert werden, um zu weiteren bedarfsgerechten Ausgestaltungen zu gelangen, ohne den Gedanken der Erfindung zu verlassen.

Die für das erfindungsgemäße Verfahren beschriebenen Vorteile und Merkmale sowie Ausführungsformen gelten gleichermaßen für die erfindungsgemäße Vorrichtung sowie ein mit der Vorrichtung ausgerüstetes Fahrzeug.

Die vorstehend in der Beschreibung genannten Merkmale und Merkmalskombinationen und/oder in den Figuren separat gezeigten Merkmale und Merkmalskombinationen sind nicht nur in der jeweils angegebenen Kombination sondern auch in anderen Kombinationen oder in Alleinstellung verwendbar, ohne den Rahmen der Erfindung zu verlassen.

## Patentansprüche

1. Verfahren zum Betreiben einer elektrischen Anschlussvorrichtung (10) für eine elektrische Anlage eines Fahrzeugs (12, 34, 38) zum elektrischen Koppeln der elektrischen Anlage des Fahrzeugs (12, 34, 38) mit einer vom Fahrzeug (12, 34, 38) getrennt angeordneten, elektrischen Energiequelle, zu welchem Zweck eine mit der vom Fahrzeug (12, 34, 38) getrennt angeordneten, elektrischen Energiequelle elektrisch verbundene Verbindungseinheit (22) mit der Anschlussvorrichtung (10) verbunden und verriegelt wird, wobei ein Entriegeln aufgrund eines manuellen Betätigens eines Betätigungselements (14, 16) der Anschlussvorrichtung (10) des Fahrzeugs (12, 34, 38) erfolgt, wenn die Verbindungseinheit (22) mit der Anschlussvorrichtung (10) verbunden ist,
wobei aufgrund eines manuellen Betätigens des Betätigungselements (14, 16) der Anschlussvorrichtung (10) geprüft wird, ob sich ein berechtigter Funkschlüssel in Kommunikationsreichweite zum Fahrzeug (12, 34, 38) befindet,
**dadurch gekennzeichnet, dass**
das Betätigungselement (14, 16) mit einem Fahrzeug-BUS in Kommunikationsverbindung steht und ein Verriegelungsmittel (24) zum Interagieren mit der Verbindungseinheit (22) im mit der Anschlussvorrichtung (10) verbundenen Zustand über den Fahrzeug-BUS gesteuert wird, wobei mittels des manuellen Betätigens des Betätigungselements (14, 16) der Fahrzeug-BUS aktiviert wird, wobei das Aktivieren nur im unverschlossenen Zustand des Fahrzeugs (12, 34, 38) freigegeben ist.

2. Verfahren nach Anspruch 1,
**dadurch gekennzeichnet, dass**
mittels des manuellen Betätigens des Betätigungselements (14, 16) ein Ladevorgang eines Energiespeichers des Fahrzeugs (12, 34, 38) gesteuert wird.

3. Verfahren nach Anspruch 1 oder 2,
**dadurch gekennzeichnet, dass**
das Betätigungselement (14, 16) deaktiviert ist, wenn das Fahrzeug (12, 34, 38) verschlossen ist.

4. Verfahren nach einem der Ansprüche 1 bis 3,
**dadurch gekennzeichnet, dass**
mit dem Verriegeln ein Ladevorgang für den Energiespeicher automatisch aktiviert wird.

5. Verfahren nach Anspruch 4,
**dadurch gekennzeichnet, dass**
der Fahrzeug-BUS nach Beenden des Ladevorgangs mittels eines manuellen Betätigens eines Betätigungselements (14, 16) der Anschlussvorrichtung (10) aktiviert wird.

6. Verfahren nach einem der Ansprüche 1 bis 5,
**dadurch gekennzeichnet, dass**
ein Timer zum Steuern des Ladevorgangs für den Energiespeicher aktiviert wird.

7. Verfahren nach Anspruch 6,
**dadurch gekennzeichnet, dass**
bei aktiviertem Timer automatisch beim Verbinden der Verbindungseinheit (22) mit der Anschlussvorrichtung (10) ein Timer-gesteuerter Ladevorgang ausgeführt wird.

8. Verfahren nach Anspruch 7, **dadurch gekennzeichnet, dass** der Ladevorgang aufgrund eines manuellen Betätigens des Betätigungselements (14, 16) der Anschlussvorrichtung (10) beendet und die Verbindung der Verbindungseinheit mit der Anschlussvorrichtung (10) entriegelt wird.

9. Verfahren nach einem der Ansprüche 6 bis 8,
**dadurch gekennzeichnet, dass**
bei einem Timer-gesteuerten Ladevorgang und aktivem Fahrzeug-BUS aufgrund eines manuellen Betätigens des Betätigungselements (14, 16) der Anschlussvorrichtung (10) der Ladevorgang ohne Timersteuerung fortgeführt wird.

10. Verfahren nach einem der Ansprüche 1 bis 9,
**dadurch gekennzeichnet, dass**
bei einer gültigen Berechtigung der Fahrzeug-BUS aktiviert wird.

11. Anschlussvorrichtung (10) für eine elektrische Anlage eines Fahrzeugs (12, 34, 38), welche Anschlussvorrichtung (10) zum elektrischen Koppeln der elektrischen Anlage des Fahrzeugs (12, 34, 38) mit einer mit einer vom Fahrzeug (12, 34, 38) getrennt angeordneten, elektrischen Energiequelle elektrisch verbundenen, vorgegebenen Verbindungseinheit (22) ausgebildet ist und ein Verriegelungsmittel (24) aufweist, mittels dem die Verbindungseinheit (22) im mit der Anschlussvorrichtung (10) verbundenen Zustand verriegelbar ist,
**dadurch gekennzeichnet, dass**
die Anschlussvorrichtung (10) zur Durchführung des Verfahrens nach einem der vorhergehenden Ansprüche eingerichtet ist.

12. Anschlussvorrichtung nach Anspruch 11,
**gekennzeichnet durch**
ein Betätigungselement (14, 16), mittels dem das Verriegelungsmittel betätigbar ist.

13. Anschlussvorrichtung nach Anspruch 11 oder 12,
**gekennzeichnet durch**
ein zweites Betätigungselement (14, 16), mittels dem eine elektrische Funktion aktivierbar ist.

14. Anschlussvorrichtung nach einem der Ansprüche 11 bis 13,
**gekennzeichnet durch**
ein Anzeigeelement (18, 20), dass dem Betätigungselement (14, 16) zugeordnet ist.

15. Fahrzeug (12, 34, 38) mit einer elektrischen Anlage, an die eine Anschlussvorrichtung (10) nach einem der Ansprüche 11 bis 14 angeschlossen ist.

## Claims

1. Method for operating an electric terminal device (10) for an electric system of a vehicle (12, 34, 38) for electrically connecting the electric system of the vehicle (12, 34, 38) to an electrical energy source arranged separately from the vehicle (12, 34, 38), for which purpose a connection unit (22) electrically connected to the electrical energy source arranged separately from the vehicle (12, 34, 38) is connected to the terminal device (10) and locked, wherein the connection unit (22) of the vehicle (12, 34, 38) is unlocked by manually actuating an actuating element (14, 16) when the connection unit (22) is connected to the terminal device (10),
wherein the terminal device (10) is checked in response to manual actuation of the actuating element (14, 16) whether an authorised wireless key is in communication range of the vehicle (12, 34, 38),
**characterised in that**
the actuating element (14, 16) is connected for communication with a vehicle-BUS and a locking device (24) is controlled via the vehicle-BUS for interacting with the connection unit (22), when the connection unit is connected to the terminal device (10), wherein the vehicle-BUS is activated in response to the manual actuation of the actuating element (14, 16), wherein the activation is unblocked only when the vehicle (12, 34, 38) is unlocked.

2. Method according to Claim 1,
**characterised in that**
the manual actuation of the actuating element (14, 16) controls a charging process of an energy storage device of the vehicle (12, 34, 38).

3. Method according to Claim 1 or 2,
**characterised in that**
the actuating element (14, 16) is deactivated when the vehicle (12, 34, 38) is locked.

4. Method according to any one of Claims 1 to 3,
**characterised in that**
a charging process for the energy storage device is activated automatically in response to locking the vehicle.

5. Method according to Claim 4,
**characterised in that**
the vehicle-BUS is activated after termination of the charging process by manually actuating an actuating element (14, 16) of the terminal device (10).

6. Method according to any one of Claims 1 to 5,
**characterised in that**
a timer is activated for controlling the charging process for the energy storage device.

7. Method according to Claim 6,
**characterised in that**
when the timer is activated, a timer-controlled charging process is executed automatically upon connection of the connection unit (22) to the terminal device (10).

8. Method according to Claim 7,
**characterised in that**
the charging process is terminated in response to manual actuation of the actuating element (14, 16) of the terminal device (10) and the connection of the connection unit to the terminal device (10) is unlocked.

9. Method according to any one of Claims 6 to 8,
**characterised in that**
when the charging process is timer-controlled and the vehicle-BUS is active, the charging process continues without timer control in response to manual actuation of the actuating element (14, 16) of the terminal device (10).

10. Method according to any one of Claims 1 to 9,
**characterised in that**
the vehicle-BUS is activated with a valid authorisation.

11. Terminal device (10) for an electric system of a vehicle (12, 34, 38), which terminal device (10) is configured to electrically connect the electric system of the vehicle (12, 34, 38) to a connection unit (22) that is electrically connected to an electrical energy source arranged separately from the vehicle (12, 34, 38) and has locking means (24) configured to lock the connection unit (22) when the connection unit (22) is connected to the terminal device (10),
**characterised in that**
the terminal device (10) is set up to implement the method according to any one of the preceding claims.

12. Terminal device according to Claim 11,
**characterised by**
an actuating element (14, 16) by means of which the locking means can be activated.

13. Terminal device according to Claim 11 or 12,
**characterised by**
a second actuating element (14, 16) by means of which an electrical function can be activated.

14. Terminal device according to any one of Claims 11 to 13,
**characterised by**
a display element (18, 20) assigned to the actuating element (14, 16).

15. Vehicle (12, 34, 38) comprising an electric system to which a terminal device (10) is connected according to any one of Claims 11 to 14.

## Revendications

1. Procédé pour faire fonctionner un dispositif de raccordement électrique (10) pour une installation électrique d'un véhicule (12, 34, 38) afin de coupler électriquement l'installation électrique du véhicule (12, 34, 38) à une source d'énergie électrique agencée séparée du véhicule (12, 34, 38), couplage électrique dans le but duquel une unité de liaison (22) reliée électriquement à la source d'énergie électrique agencée séparée du véhicule (12, 34, 38) est reliée au dispositif de raccordement (10) et verrouillée sur celui-ci, un déverrouillage s'effectuant en raison d'un actionnement manuel d'un élément d'actionnement (14, 16) du dispositif de raccordement (10) du véhicule (12, 34, 38) lorsque l'unité de liaison (22) est reliée au dispositif de raccordement (10),
dans lequel, en raison d'un actionnement manuel de l'élément d'actionnement (14, 16) du dispositif de raccordement (10), on vérifie si une clé autorisée de commande à distance se trouve à portée de communication du véhicule (12, 34, 38),
**caractérisé en ce que** l'élément d'actionnement (14, 16) est en liaison de communication avec un BUS de véhicule et un moyen de verrouillage (24) est commandé par l'intermédiaire du BUS de véhicule pour interagir avec l'unité de liaison (22) lorsqu'elle est reliée au dispositif de raccordement (10), le BUS de véhicule étant activé au moyen de l'actionnement manuel de l'élément d'actionnement (14, 16) et l'activation n'étant autorisée que lorsque le véhicule (12, 34, 38) n'est pas fermé.

2. Procédé selon la revendication 1, **caractérisé en ce que**, au moyen de l'actionnement manuel de l'élément d'actionnement (14, 16), on commande une opération de chargement d'un accumulateur d'énergie du véhicule (12, 34, 38).

3. Procédé selon la revendication 1 ou 2, **caractérisé en ce que** l'élément d'actionnement (14, 16) est désactivé lorsque le véhicule (12, 34, 38) est fermé.

4. Procédé selon l'une des revendications 1 à 3, **caractérisé en ce que**, avec le verrouillage, on active automatiquement une opération de chargement pour l'accumulateur d'énergie.

5. Procédé selon la revendication 4, **caractérisé en ce que**, après la fin de l'opération de chargement, on active le BUS de véhicule au moyen d'un actionnement manuel (14, 16) du dispositif de raccordement (10).

6. Procédé selon l'une des revendications 1 à 5, **caractérisé en ce que** l'on active un temporisateur pour commander l'opération de chargement pour l'accumulateur d'énergie.

7. Procédé selon la revendication 6, **caractérisé en ce que**, lorsque le temporisateur est activé, on réalise automatiquement une opération de chargement commandée par temporisateur lors de la liaison de l'unité de liaison (22) avec le dispositif de raccordement (10).

8. Procédé selon la revendication 7, **caractérisé en ce que**, en raison d'un actionnement manuel de l'élément d'actionnement (14, 16) du dispositif de raccordement (10), on met fin à l'opération de chargement et on déverrouille la liaison de l'unité de liaison avec le dispositif de raccordement (10).

9. Procédé selon l'une des revendications 6 à 8, **caractérisé en ce que**, lorsque l'opération de chargement est commandée par temporisateur et que le BUS de véhicule est actif, on poursuit l'opération de chargement sans commande par temporisateur en raison d'un actionnement manuel de l'élément d'actionnement (14, 16) du dispositif de raccordement (10).

10. Procédé selon l'une des revendications 1 à 9, **caractérisé en ce que**, lorsqu'une autorisation est valide, on active le BUS de véhicule.

11. Dispositif de raccordement (10) pour une installation électrique d'un véhicule (12, 34, 38), lequel dispositif de raccordement (10) est réalisé pour coupler électriquement l'installation électrique du véhicule (12, 34, 38) à une unité de liaison (22) prédéterminée reliée électriquement à une source d'énergie électrique agencée séparée du véhicule (12, 34, 38) et comporte un moyen de verrouillage (24) au moyen duquel l'unité de liaison (22) est verrouillable dans l'état relié au dispositif de raccordement (10),
**caractérisé en ce que** le dispositif de raccordement (10) est installé pour la mise en oeuvre du procédé selon l'une des revendications précédentes.

12. Dispositif de raccordement selon la revendication 11, **caractérisé par** un élément d'actionnement (14, 16), au moyen duquel le moyen de verrouillage est actionnable.

13. Dispositif de raccordement selon la revendication 11 ou 12, **caractérisé par** un deuxième élément d'actionnement (14, 16) au moyen duquel une fonction électrique est activable.

14. Dispositif de raccordement selon l'une des revendications 11 à 13, **caractérisé par** un élément d'affichage (18, 20), qui est associé à l'élément d'actionnement (14, 16).

15. Véhicule (12, 34, 38) avec une installation électrique, à laquelle un dispositif de raccordement (10) selon l'une des revendications 11 à 14 est raccordé.
